# EUROPÄISCHE PATENTANMELDUNG

(11) **EP 0 679 609 A2**
(43) Veröffentlichungstag der Anmeldung: **02.11.1995**
(21) Anmeldenummer: 95104566.5
(22) Anmeldetag: 28.03.1995
(51) Int. Cl.: C01B 31/02

(54) **Verfahren zur Reinigung von Fullerenen**

(30) Priorität: 11.04.1994 DE 4412361
(71) Anmelder: HOECHST AKTIENGESELLSCHAFT, D-65929 Frankfurt am Main (DE)
(72) Erfinder: Müller, Wolfgang, Dr., D-65207 Wiesbaden (DE)

(57) **Zusammenfassung**

Die Erfindung betrifft ein Verfahren zur Reinigung von Fullerenen, die als pulverisierter Feststoff in einer Reinheit von mindestens 90 Gew.-% vorliegen, das dadurch gekennzeichnet ist, daß man den pulverisierten Feststoff in einem unpolaren organischen Medium suspendiert und damit auswäscht, die Suspension filtriert und den Filtrationsrückstand isoliert.

## Beschreibung

Präparative C₆₀/C₇₀-Trennungen werden üblicherweise mittels Flüssigkeitschromatographie durchgeführt (z.B. M. Meier, J. Org. Chem. 1992, 57, 1924-26). Hochreine C₆₀- und C₇₀-Fraktionen lassen sich chromatographisch allerdings nur mit teuren speziellen Lösemitteln und Säulenmaterialien erhalten. Bei der Verwendung von Standardlösemitteln und -säulenmaterialien ist eine mangelnde Basislinientrennung bzw. ein Peak-Tailing zu beobachten, wodurch verunreinigte C₆₀- bzw. C₇₀-Fraktionen resultieren. Ein weiterer Nachteil sind die bei einer chromatographischen Trennung erforderlichen großen Lösemittelmengen.

Coustel et al. (J. Chem. Soc., Chem. Commun., (1992), 1402) beschreiben ein Extraktionsverfahren zur Reinigung von C₆₀, wobei ein aus Fullerenruß durch Extraktion gewonnenes C₆₀-Pulver (98 %) nochmals mit Toluol extrahiert und umkristallisiert wird. Die Reinheit des erhaltenen C₆₀-Pulvers beträgt 99,5 %. Von Nachteil bei diesem Verfahren sind die erheblichen Ausbeuteverluste, die unter anderem dadurch bedingt sind, daß das eingesetzte C₆₀-Pulver nur 40 Gew.-% des gesamten extrahierten Produktes beträgt und bei der Heißextraktion ein Teil des C₆₀-Pulvers ebenfalls in Lösung geht. Ferner eignet sich das Verfahren nicht zur Herstellung von hochreinen C₇₀-Fullerenen.

Aufgabe ist es daher ein verbessertes, kostengünstiges Verfahren zur Trennung von Fullerenen zu entwickeln, das zu hochreinen Fullerenen in guten Ausbeuten führt.

Gegenstand der Erfindung ist ein Verfahren zur Reinigung von Fullerenen, die als pulverisierter Feststoff in einer Reinheit von mindestens 90 Gew.-% vorliegen, wobei man den pulverisierten Feststoff in einem unpolaren organischen Medium suspendiert und damit auswäscht, die Suspension filtriert und den Filtrationsrückstand isoliert.

Bei dem erfindungsgemäßen Verfahren handelt es sich um eine Nachreinigung von Fullerenen, die durch einen physikalischen Trennprozeß wie der Flüssigkeitschromatographie oder der Sublimation bei der Auftrennung des Rohfullerens (70 bis 80 Gew.-% C₆₀, 20 bis 30 Gew.-% C₇₀ und 1 bis 2 Gew.-% > C₇₀) in einer Reinheit von mindestens 90 Gew.-% erhalten wurden (M. Meier J. Org. Chem. 1992, 57, 1924-26; EP-A-568918). Die Gewinnung des Rohfullerens durch Extraktion von Fullerenruß und die Herstellung von Fullerenruß nach dem Lichtbogenverfahren wird beispielsweise in der WO 92/04279 und von W. Krätschmer et al. (Nature 347 (1990), 354) beschrieben.

Vorzugsweise wird das bei dem erfindungsgemäßen Verfahren eingesetzte Fullerenpulver aus einer homogenen Fullerenlösung, die durch chromatographische Trennung eines Rohfullerengemisches erhalten wurde (M. Meier J. Org. Chem. 1992, 57, 1924-26; EP-A-568918), gewonnen. Dabei ist unter einer homogenen Fullerenlösung eine Lösung von Fullerenen in einem unpolaren organischen Lösemittel unterhalb der Sättigungskonzentration in dem jeweiligen Lösemittel zu verstehen (N. Sivaranam et al., J. Org. Chem. 1992, 57, 6077-6079). Dazu wird in üblicher Weise, vorzugsweise bei vermindertem Druck, das Lösemittel entfernt und der so erhaltene Feststoff wird, falls er nicht bereits als Pulver anfällt, in üblicher Weise fein zerkleinert.

Bevorzugt werden bei dem erfindungsgemäßen Verfahren Fullerenpulver eingesetzt, die mindestens 90 Gew.-% C₆₀ oder mindestens 90 Gew.-% C₇₀ enthalten.

Der Auswasch- und Filtrationsvorgang des erfindungsgemäßen Verfahrens wird im allgemeinen mehrmals, bevorzugt zwei- bis fünfmal, besonders bevorzugt drei- bis fünfmal, wiederholt. Als Auswaschmedium eignet sich ein unpolares organisches Medium beispielsweise n-Hexan, Cyclohexan, Benzol, Toluol und CS₂, vorzugsweise Benzol und Toluol, insbesondere Toluol. Pro Gramm Fullerenpulver wird im allgemeinen 75 bis 250 ml, vorzugsweise 90 bis 110 ml, Auswaschmedium eingesetzt.

Das Fullerenpulver wird im allgemeinen in dem Auswaschmedium suspendiert und unter Rühren bei einer Temperatur von 0 bis 50°C, vorzugsweise 15 bis 25°C, ausgewaschen.

Als vorteilhaft hat sich die gleichzeitige Anwendung von Ultraschall (z.B. 35 kHz) erwiesen.
Der Auswasch- und Filtrationsvorgang dauert im allgemeinen 1 bis 20 Minuten pro Zyklus, vorzugsweise 3 bis 7 Minuten pro Zyklus. Nach der letzten Filtration wird der Filtrationsrückstand in üblicher Weise getrocknet.

### Beispiele

### Beispiel 1

### Herstellung von Fullerenruß, Rohfulleren und dessen Auftrennung

Die Herstellung des Fullerenrußes erfolgte nach dem Lichtbogenverfahren aus 18 kg Graphitstäben wie in EP-A-536500 beschrieben. Dabei erhielt man 17 kg Fullerenruß, der mittels 4-stufiger Gegenstromextraktion mit Toluol (4 x 200 l) extrahiert wurde. Nach Abtrennen der festen Rußpartikel und Einengen der vereinigten Extrakte wurde ein Rohfullerenkonzentrat (250 l) erhalten, welches laut HPLC-Analyse 765 g C₆₀ und 255 g C₇₀, neben weiteren höheren Fullerenen > C₇₀, sowie organischen Verunreinigungen enthält.
Das Konzentrat wurde direkt auf eine 1,0 m³ Trennsäule (mit Sigri-HR 70-Phase) aufgegeben und mit insgesamt 2800 l Toluol eluiert. Die erste Fraktion (450 l) enthielt C₆₀ in einer Reinheit von 97 %, laut HPLC-Analyse waren insgesamt 680 g C₆₀ enthalten.

Nach der Zwischenfraktion F2 (150 l), die zurückgeführt wurde, erhielt man Fraktion 3 (2200 l), welche der C₇₀-Fraktion enspricht und 97 % reines C₇₀ enthält, laut Analyse insgesamt 221 g C₇₀.

### Erzeugung von Fullerenpulver

Ca. 10 Vol.-% der Fraktion 1 (97 % -C₆₀-Gehalt) wurden langsam im Rotationsverdampfer eingeengt.

| | |
|---|---|
| Badtemperatur: | 100°C, |
| Vakuum: | 110 mbar, |
| Verdampferleistung: | 20 l/h, |
| Volumen der Destillationsblase: | 100 l |

Die Lösung wurde bis auf eine Restfeuchte von 50 % eingeengt, anschließend mit 3 l Aceton suspendiert und über eine Glaskeramikfritte im Vakuum abfiltriert.

Der Feststoff wurde bei 25°C im Vakuum (0,1 bar) getrocknet. Dabei erhielt man 75 g 97 % C₆₀-Fulleren.

Analog wurde mit Fraktion 3 verfahren. Man erhielt 40 g 97 % C₇₀-Fulleren.

### Nachreinigung des Fullerenpulvers durch Auswaschen

Das Fullerenpulver wurde mit Toluol (pro g Pulver / 10 ml Toluol) unter Ultraschalleinwirkung (Sonorex RK 106, Fa. Bandelin, 35 kHz, 240 W) bei 25°C 5 Minuten gerührt und mit einer Vakuum-Umkehrfritte rasch abfiltiert. Dieser Vorgang wurde dreimal wiederholt, danach wurde der verbleibende Rückstand bei 0,1 bar getrocknet und ausgewogen (s. Tabelle 1).

**Tabelle 1**

| Anreicherung von C₆₀- bzw. C₇₀- Fulleren im Feststoff | | | | |
|---|---|---|---|---|
| Ausgangssubstanz | | Waschzyklen | Endsubstanz | |
| Menge | C₆₀:C₇₀ | | Ausbeute | C₆₀:C₇₀ |
| 75 g | 97 : 3 | 3 x 750 ml | 85 % | > 99,4 : < 0,6 |
| 40 g | 3 : 97 | 5 x 400 ml | 72 % | < 1,0 : > 99,0 |

Die C₆₀/C₇₀-Verhältnisse wurden vor und nach der Behandlung mittels HPLC bestimmt.

## Patentansprüche

1. Verfahren zur Reinigung von Fullerenen, die in einer Reinheit von mindestens 90 Gew.-% als pulverisierter Feststoff vorliegen, dadurch gekennzeichnet, daß man den pulverisierten Feststoff in einem unpolaren organischen Medium suspendiert und damit auswäscht, die Suspension filtriert und den Fitrationsrückstand isoliert.

2. Verfahren gemäß Anspruch 1, dadurch gekennzeichnet, daß der pulverisierte Feststoff mindestens 90 Gew.-% C₆₀-Fulleren enthält.

3. Verfahren gemäß Anspruch 1, dadurch gekennzeichnet, daß der pulverisierte Feststoff mindestens 90 Gew.-% C₇₀-Fulleren enthält.

4. Verfahren gemäß einem oder mehreren der Ansprüche 1 bis 3, dadurch gekennzeichnet, daß als unpolares organisches Medium Toluol verwendet wird.

5. Verfahren gemäß einem oder mehreren der Ansprüche 1 bis 4, dadurch gekennzeichnet, daß das Auswaschen und Filtrieren mehrmals wiederholt wird.
